# EUROPÄISCHE PATENTANMELDUNG

(11) **EP 0 717 216 A1**
(43) Veröffentlichungstag der Anmeldung: **19.06.1996**
(21) Anmeldenummer: 95117493.7
(22) Anmeldetag: 07.11.1995
(51) Int. Cl.: F16H 3/16, F16H 3/089, F16H 57/02

(54) **Getriebe**

(30) Priorität: 14.12.1994 DE 9419891 U
(71) Anmelder: A. FRIEDR. FLENDER AG, D-46395 Bocholt (DE)
(72) Erfinder: Urban, Ludger, D-46419 Isselburg (DE)
(74) Vertreter: Müller, Jürgen, Dipl.-Ing.

(57) **Zusammenfassung**

Das Getriebe ist mit einer Antriebswelle (3) und mit einer mit ihr über ein oder über zwei Zahnräder (13, 14) mit unterschiedlicher Zähnezahl verbundene Abtriebs- oder Zwischenwelle (12) versehen. Das Zahnrad (13, 14) steht mit einem Ritzel (10, 11) auf einer Hohlwelle (5, 6) in Eingriff, die die Antriebswelle (3) koaxial umgibt und mit dieser über eine Schalthülse (9) verbunden ist. Auf der Antriebswelle (3) ist symmetrisch zu der Hohlwelle (5) Platz für eine zweite gleichartige Hohlwelle (6) und auf der Abtriebs- oder Zwischenwelle (12) ist symmetrisch zu dem Zahnrad (13) Platz für ein zweites Zahnrad (14) mit unterschiedlicher Zähnezahl vorhanden.

## Beschreibung

Die Erfindung betrifft ein Getriebe mit einer Antriebswelle und einer mit ihr verbundenen Abtriebs- oder Zwischenwelle mit den Merkmalen des Oberbegriffes des Anspruches 1 oder 2.

Bei bekannten als Schaltgetriebe ausgebildeten Getrieben sind die Antriebsritzel drehfest auf der Antriebswelle angeordnet und jeweils fest einem bestimmten Zahnrad auf der Abtriebs- oder Zwischenwelle Zugeordnet. Soll das Getriebe von vorgegebenen Drehzahlen auf andere Drehzahlen umgerüstet werden, so ist für jedes Übersetzungsverhältnis ein besonderes der Antriebswelle angepaßtes Antriebsritzel mit dem dazugehörenden Zahnrad erforderlich. Diese Notwendigkeit erfordert eine große Lagerhaltung.

Der Erfindung liegt die Aufgabe zugrunde, ein Getriebe zu schaffen, mit dessen Hilfe viele Übersetzungsvarianten mit möglichst wenigen Teilen dargestellt werden können und das bei gleichem Aufbau sowohl als Schaltgetriebe als auch als ungeschaltetes Getriebe verwendet werden kann.

Diese Aufgabe wird bei einem gattungsgemäßen Getriebe erfindungsgemäß durch die kennzeichnenden Merkmale des Anspruches 1 oder 2 gelöst.

Durch die Verwendung der gleichartigen Hohlwellen mit unterschiedlichen Ritzelzähnezahlen ist ein Getriebe entstanden, das einen völlig symmetrischen Aufbau aller Teile zeigt, so daß diese je nach Anforderung hinsichtlich der zu übertragenden Drehzahl gegeneinander ausgetauscht werden können. Dabei ist es auch möglich, das Getriebe mit nur einem Ritzel mit dazugehörendem Zahnrad auszurüsten, so daß das Getriebe wie ein ungeschaltetes Getriebe arbeitet. Dieses ungeschaltete Getriebe kann später jederzeit durch den Einbau der zweiten Hohlwelle in ein Schaltgetriebe umgerüstet werden.

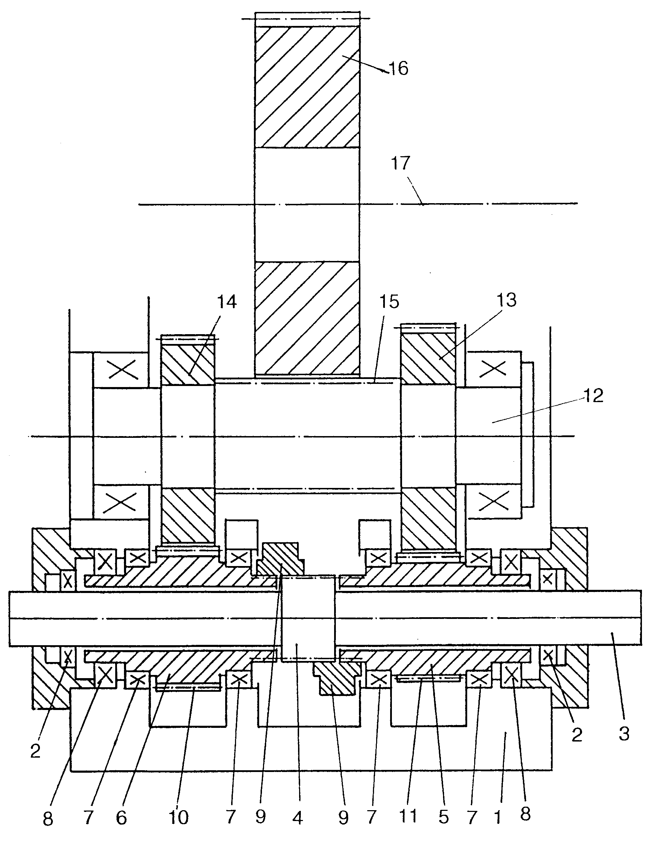

Ein Ausführungsbeispiel der Erfindung ist in der Zeichnung dargestellt und wird im folgenden näher erläutert. Die Zeichnung zeigt den Längsschnitt durch ein Getriebe.

Ein nur teilweise gezeigtes Getriebe weist ein Getriebegehäuse 1 auf, in dem in Radiallagern 2 eine Antriebswelle 3 gelagert ist. Die Antriebswelle 3 trägt einen Wellenbund 4. Symmetrisch zu dem Wellenbund 4 ist die Antriebswelle 3 von zwei gleichartigen Hohlwellen 5, 6 umgeben. Die Hohlwellen 5, 6 sind über Radiallager 7 und Axiallager 8 in dem Getriebegehäuse 1 gelagert. Auf dem Umfang sind die innenliegenden Enden der Hohlwellen 5, 6 ebenso wie der Wellenbund 4 mit einer Vielkeilverzahnung versehen, in die jeweils eine Schalthülse 9 eingreift. Über einen nicht gezeigten Hebel läßt sich die Schalthülse 9 über die eine oder die andere Hohlwelle 5, 6 schieben, so daß die Antriebswelle 3 mit der betreffenden Hohlwelle 5, 6 gekoppelt ist.

Jede Hohlwelle 5, 6 trägt ein Ritzel 10, 11, das in ein drehfest auf einer Zwischenwelle 12 angeordnetes Zahnrad 13, 14 eingreift. Die beiden Zahnräder 13, 14 der Zwischenwelle 12 weisen eine unterschiedliche Zähnezahl auf. Ein weiteres drehfest auf der Zwischenwelle 12 angeordnetes Zahnrad 15 steht in Eingriff mit einem Zahnrad 16 einer Abtriebswelle 17. Der Abtrieb kann auch über die gezeigte Zwischenwelle 12 erfolgen, so daß diese als Abtriebswelle dient.

Das Getriebe kann auch mit nur einer Hohlwelle 5 und dem dazugehörenden Zahnrad 13 der Zwischenwelle 12 ausgerüstet sein. In diesem Fall, in dem über die Hohlwelle 5 ein einziges Übersetzungsverhältnis eingestellt ist, wird durch Festklemmen der betreffenden Schalthülse 9 die eine Hohlwelle 5 dauerhaft mit der Antriebswelle 3 gekoppelt. Da das Getriebegehäuse 1, die Antriebswelle 3 und die Zwischenwelle 12 symmetrisch aufgebaut sind, bleibt der Raum, der gemäß der Zeichnung von der zweiten Hohlwelle 6 und dem zweiten Zahnrad 14 der Zwischenwelle 12 eingenommen ist, frei. Sollte das Getriebe eine zweite Drehzahl übertragen, so können die dazu benötigten Getriebeteile ohne weiteres nachträglich in das vorhandene Getriebegehäuse 1 eingebaut werden.

## Patentansprüche

1. Getriebe mit einer Antriebswelle (3) und einer mit ihr über ein oder über zwei Zahnräder (13, 14) mit unterschiedlicher Zähnezahl verbundene Abtriebs- oder Zwischenwelle (12), dadurch gekennzeichnet, daß das Zahnrad (13, 14) mit einem Ritzel (10, 11) auf einer Hohlwelle (5, 6) in Eingriff steht, die die Antriebswelle (3) koaxial umgibt und mit dieser über eine Schalthülse (9) verbunden ist und daß auf der Antriebswelle (3) symmetrisch zu der Hohlwelle (5) Platz für eine zweite gleichartige Hohlwelle (6) und auf der Abtriebs- oder Zwischenwelle (12) symmetrisch zu dem Zahnrad (13) Platz für ein zweites Zahnrad (14) mit unterschiedlicher Zahnezahl vorhanden ist.

2. Getriebe mit einer Antriebswelle (3) und einer mit ihr über ein oder über zwei Zahnräder (13, 14) mit unterschiedlicher Zähnezahl verbundene Abtriebs- oder Zwischenwelle (12), dadurch gekennzeichnet, daß jedes Zahnrad (13, 14) mit einem Ritzel (10, 11) auf einer Hohlwelle (5, 6) in Eingriff steht, daß die Hohlwellen (5, 6) die Antriebswelle (3) koaxial umgeben, mit dieser jeweils über eine Schalthülse (9) verbunden, symmetrisch zueinander angeordnet und untereinander gleichartig sind.
